# EUROPEAN PATENT SPECIFICATION

(11) **EP 3 337 227 B1**
(45) Date of publication and mention of the grant of the patent: **28.10.2020**
(21) Application number: 16834855.5
(22) Date of filing: 20.05.2016
(51) Int. Cl.: H04W 36/14, H04W 88/06, H04W 76/19, H04W 36/30

(54) **BASE STATION DEVICE, COMMUNICATION DEVICE, CONTROL METHOD, AND PROGRAM**
BASISSTATIONSVORRICHTUNG, KOMMUNIKATIONSVORRICHTUNG, STEUERUNGSVERFAHREN UND PROGRAMM
DISPOSITIF DE STATION DE BASE, DISPOSITIF DE COMMUNICATION, PROCÉDÉ DE COMMANDE ET PROGRAMME

(30) Priority: 11.08.2015 JP 2015159124
(43) Date of publication of application: 20.06.2018
(73) Proprietor: KDDI Corporation, Tokyo 163-8003 (JP)
(72) Inventor: PENG, Hailan, Fujimino-shi, Saitama 356-8502, (JP); MORIWAKI, Kazuya, Fujimino-shi, Saitama 356-8502, (JP); SUEGARA, Yasuhiro, Fujimino-shi, Saitama 356-8502, (JP)
(74) Representative: Pitchford, James Edward
(86) International application number: PCT/JP2016/064956
(87) International publication number: WO 2017/026158

(56) References cited:
- WO-A1-2013/091161
- WO-A1-2014/069959
- JP-A- 2013 198 089
- US-A1- 2015 045 035
- INTERDIGITAL COMMUNICATIONS: "WLAN Reliability with LTE+WLAN Aggregation in LTE R13", 3GPP DRAFT; R2-152563 (REL-13 LTE+WLAN - WLAN RELIABILITY), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20150525 - 20150529 24 May 2015 (2015-05-24), XP050971557, Retrieved from the Internet: URL:http://www.3gpp.org/ftp/Meetings_3GPP_ SYNC/RAN2/Docs/ [retrieved on 2015-05-24]
- QUALCOMM INCORPORATED ET AL.: 'Control Plane Architecture for LTE-WLAN Aggregation' 3GPP TSG-RAN WG2 MEETING #90 R2-152738 29 May 2015, pages 2 - 3, XP050972952
- 3GPP: '3rd Generation Partnership Project; Technical Specification Group Radio Access Network;' STUDY ON WIRELESS LOCAL AREA NETWORK (WLAN) - 3GPP RADIO INTERWORKING (RELEASE 12), 3GPP TR 37.834 V12.0.0 (2013-12) 07 January 2014, page 14, XP050729404
- CATT: 'Discussion on Architecture and Procedure of C-plane for LTE-WLAN Aggregation' 3GPP TSG RAN WG2 MEETING #90 R2-152125 29 May 2015, pages 3 - 4, XP050970582

## Description

### TECHNICAL FIELD

The present invention relates to a base station apparatus, a communication apparatus, a control method, and a program, and specifically relates to a connection control technique in a wireless communication system in which different types of wireless communication techniques coexist.

### BACKGROUND ART

Today, in order to improve the system capacity and throughput in future wireless access networks, a method for using Long-Term Evolution (LTE) and a wireless LAN (WLAN) in coordination with each other has been studied (see NPL 1). With this method, a terminal performs communication by connecting to an access point (AP) on the WLAN side under control of a base station (eNB) on the LTE side (in response to an instruction from the eNB).

### CITATION LIST

### NON-PATENT LITERATURE

NPL 1: Intel et al., RP-150510, "LTE-WLAN Radio Level Integration and Interworking Enhancement," 3GPP, March 2015.

Further background art is provided in a paper by InterDigital Communications entitled "WLAN Reliability with LTE+WLAN Aggregation in LTE R13" (3GPP TSG-RAN WG2 #90, R2-152563, Fukuoka, Japan, May 2015), which discusses the reliability of the WLAN for LTE+WLAN aggregation.

### SUMMARY OF INVENTION

### TECHNICAL PROBLEM

For example, in the case of Dual Connectivity where an eNB of LTE, together with another eNB of LTE, performs communication with one wireless terminal, the eNB of LTE can precisely acknowledge the state of the wireless terminal because every communication performed by the wireless terminal is completed within an LTE system. When a failure has occurred in communication between another eNB and a wireless terminal, an eNB can continue communication under Dual Connectivity by causing the wireless terminal to connect to still another eNB. On the other hand, regarding communication between a wireless terminal in a wireless LAN and an AP, the eNB cannot acknowledge the status of the wireless terminal in that communication. Therefore, they may be cases where an eNB cannot appropriately execute connection control for a wireless terminal in a wireless LAN.

The present invention provides a technique to enable appropriate execution of connection control in a case where different types of wireless systems are used in parallel.

### SOLUTION TO PROBLEM

The present invention provides a base station apparatus as defined in Claim 1 of the appended claims. Also provided is a communication apparatus as defined in Claim 7 control methods as defined in Claims 8 and 9 programs as defined in Claims 10 and 11 Details of certain embodiments are set out in the dependent claims.

A base station apparatus according to one aspect of the present invention is a base station apparatus in a wireless communication system that includes the base station apparatus and a terminal capable of connecting to the base station apparatus in a first system and connecting to another apparatus in a second system. The base station apparatus includes: obtainment means for, when a failure has occurred in connection in the second system between the terminal and the another apparatus, obtaining information indicating whether the failure is attributed to suspension of communication functions of the terminal in the second system; and control means for controlling connection of the terminal in the second system based on the information.

A communication apparatus according to another aspect of the present invention is a communication apparatus in a wireless communication system that includes a base station apparatus and the communication apparatus, the communication apparatus being capable of connecting to the base station apparatus in a first system and connecting to another apparatus in a second system. The communication apparatus includes notification means for, when a failure has occurred in connection in the second system between the communication apparatus and the another apparatus, notifying the base station apparatus of information indicating whether the failure is attributed to suspension of communication functions of the communication apparatus in the second system. The base station apparatus controls connection of the communication apparatus in the second system based on the information.

### ADVANTAGEOUS EFFECTS OF INVENTION

The present invention enables appropriate execution of connection control in a case where different types of wireless systems are used in parallel.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate an embodiment of the present invention, and together with a description thereof, serve to explain the principles of the present invention.
FIG. 1 is a diagram showing an overview of an exemplary configuration and a processing flow of a wireless communication system.
FIG. 2 is a diagram showing exemplary hardware components of a base station apparatus and a wireless terminal.
FIG. 3 is a block diagram showing exemplary functional components of the base station apparatus.
FIG. 4 is a block diagram showing exemplary functional components of the wireless terminal.
FIG. 5 is a diagram showing a flow of processing executed in the wireless communication system.
FIG. 6 is a diagram showing a flow of processing executed in the wireless communication system.
FIG. 7A is a diagram showing an exemplary network configuration and an exemplary flow of data transfer processing.
FIG. 7B is a diagram showing an exemplary network configuration and an exemplary flow of data transfer processing.
FIG. 8A is a diagram showing an exemplary network configuration and an exemplary flow of data transfer processing.
FIG. 8B is a diagram showing an exemplary network configuration and an exemplary flow of data transfer processing.
FIG. 9A is a diagram showing an exemplary network configuration and an exemplary flow of data transfer processing.
FIG. 9B is a diagram showing an exemplary network configuration and an exemplary flow of data transfer processing.
FIG. 10A is a diagram showing an exemplary network configuration and an exemplary flow of data transfer processing.
FIG. 10B is a diagram showing an exemplary network configuration and an exemplary flow of data transfer processing.

### DESCRIPTION OF EMBODIMENTS

The following describes an embodiment of the present invention in detail with reference to the accompanying drawings.

### (Wireless Communication System)

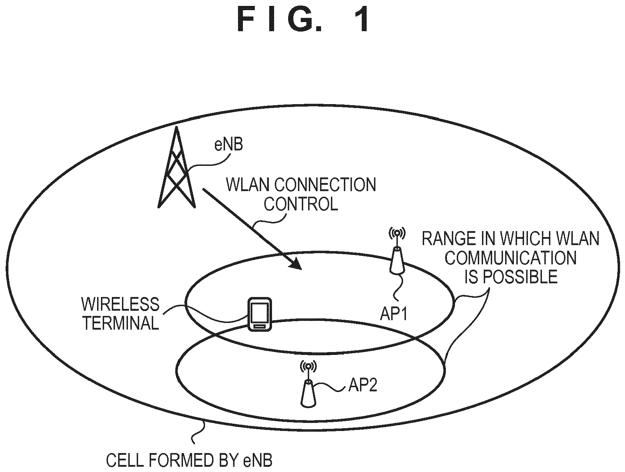

FIG. 1 shows an exemplary configuration of a wireless communication system according to the present embodiment. The present wireless communication system is composed of, for example, a base station apparatus (eNB) of Long-Term Evolution (LTE), wireless LAN access points (APs), and a wireless terminal. Note that the base station apparatus may be, for example, a base station apparatus of other wireless communication standards, such as a mobile telephone of a generation before LTE, and the APs may similarly be communication apparatuses compliant with any wireless communication standard. Also note that wireless LANs may use, for example, a frequency band of 2.4 GHz, 5.2 GHz, 5.3 GHz, or 5.6 GHz, or may use, for example, a millimeter band or a quasi-millimeter band, such as a 60-GHz band. It will be assumed that the base station apparatus and the APs are compliant with different wireless communication methods, and the base station apparatus performs first wireless communication with the wireless terminal, whereas the APs perform second wireless communication that is different from the first wireless communication with the wireless terminal. Although the example of FIG. 1 shows one base station apparatus, two access points, and one wireless terminal, no limitation is intended in this regard, and a plurality of base station apparatuses, one or at least three access points, and a plurality of wireless terminals can exist.

Furthermore, although it will be assumed below that the wireless terminal that connects to the cellular base station apparatus (the eNB of LTE) further attempts to connect to a wireless LAN AP, no limitation is intended in this regard. That is to say, the following discussion can be applied to a system in which a first communication apparatus in an arbitrary first system that leads communication control connects to a wireless terminal, and the wireless terminal further connects to a second communication apparatus in an arbitrary second system in response to an instruction from the first communication apparatus. It will be assumed that the wireless terminal is capable of, for example, suspending communication functions related to the second system separately from communication functions related to the first system. Furthermore, the wireless terminal can be capable of, for example, suspending the communication functions related to the first system separately from the communication functions related to the second system. For example, similarly to a conventional smartphone, the wireless terminal is capable of suspending cellular communication functions and wireless LAN communication functions separately.

When, for example, another eNB of LTE and one wireless terminal are connected to each other under Dual Connectivity, an eNB can acknowledge the state of communication between another eNB and the wireless terminal because this communication is also related to LTE. Furthermore, as long as connection between an eNB and a wireless terminal is formed, LTE communication functions of the wireless terminal are not suspended. On the other hand, a wireless terminal can suspend the wireless LAN communication functions while communicating with an eNB via LTE. That is to say, in wireless LAN communication, an RLF could possibly occur due to suspension of communication functions by the wireless terminal. In this case, even if the eNB instructs the wireless terminal to connect to another AP, the wireless terminal may not be capable of connecting to another AP because the wireless terminal may have suspended the wireless LAN communication functions.

In view of this, in the present embodiment, when a failure has occurred in wireless LAN connection of the wireless terminal, the eNB obtains information indicating whether the failure is attributed to suspension of the wireless LAN communication functions of the wireless terminal. Here, the eNB can obtain this information from the wireless terminal, for example. In this case, when a failure has occurred in wireless LAN connection, the wireless terminal can notify the eNB of information indicating whether the failure is attributed to suspension of the wireless LAN communication functions of the wireless terminal using, for example, a predetermined message. For example, this predetermined message may be an SCGFailureInformation message for Dual Connectivity defined by 3GPP, or a message in any other format. Furthermore, this information may be transmitted via a control channel, or may be transmitted via a data channel. Note that in a case where a failure has occurred in wireless LAN connection when the wireless LAN communication functions of the wireless terminal have not been suspended, the wireless terminal can transmit information indicating that the failure is not attributed to suspension of the wireless LAN communication functions of the wireless terminal. In this case, the information may include information related to another reason of the occurrence of the failure. For example, when the failure has occurred because a term in which the establishment of wireless LAN connection failed or a term in which communication failed has exceeded a predetermined length, the wireless terminal can notify the eNB of the fact that a term in which communication was unable to be performed has exceeded the predetermined length as a cause of the failure. Note that when the failure has occurred in wireless LAN connection due to another cause, the wireless terminal can similarly notify the eNB of that cause.

The wireless terminal can notify the eNB of information (e.g., BSSID) that designates an AP that served as a connection target until then. This enables the eNB to acknowledge the location of the occurrence of the connection failure between the wireless terminal and a certain AP. Note that the eNB may store and manage APs that serve as wireless LAN connection destinations for various wireless terminals when transmitting a wireless LAN connection instruction to the wireless terminals; in this case, the wireless terminals may not notify the eNB of the information related to the AP that served as the connection target until then.

Upon obtaining the information indicating whether the failure in wireless LAN connection is attributed to suspension of the wireless LAN communication functions of the wireless terminal, the eNB executes wireless LAN connection control between the wireless terminal and an AP based on that information. For example, when the obtained information indicates that the connection failure is attributed to suspension of the wireless LAN communication functions of the wireless terminal, the eNB instructs the wireless terminal and the AP to cut off the wireless LAN connection. This instruction can be, for example, an instruction for cancelling communication that is performed via LTE and a wireless LAN concurrently (e.g., LTE-WLAN Aggregation (LWA)). For example, the eNB can transmit the instruction for cancelling the wireless LAN connection to the AP using an RRC message. In this way, the eNB can be prevented from causing the wireless terminal to make an attempt for the wireless LAN connection continuously even though the wireless terminal has suspended the wireless LAN communication functions.

Upon obtaining the information indicating that the reason of the failure in the wireless LAN connection is not the suspension of the wireless LAN communication functions of the wireless terminal, the eNB can, for example, execute control for switching an AP that serves as a wireless LAN connection destination for the wireless terminal. In this case, the eNB instructs the AP that served as the connection destination for the wireless terminal until then to cut off connection to the wireless terminal, and also instructs an AP that serves as a connection destination from then on to establish connection to the wireless terminal. At this time, the establishment instruction from the eNB to the AP serving as the connection destination can be an instruction for starting processing for transmitting user data transferred from the eNB to the wireless terminal under control of the eNB. Note that this instruction can be issued to a WLAN Terminal (WT), which is a node placed between the eNB and the AP. A WT is connected to one or more APs, and upon receiving an instruction from the eNB, can transfer user data from the eNB to an AP connected to the WT and cause that AP serving as a transfer destination to transmit that user data to the wireless terminal.

Note that when the failure has occurred in the wireless LAN connection, the wireless terminal may transmit, to the eNB, information (e.g., BSSID) that specifies an AP that serves as a candidate for a switchover destination together with the information indicating the reason of the occurrence of the failure. At this time, for example, when a plurality of APs are connected to one WT, the wireless terminal may autonomously switch from the AP serving as the connection destination to another AP. In this case, after the switching, the wireless terminal may notify the eNB of information that specifies the AP serving as the switchover destination. In this case, in response to the received notification, the eNB can instruct the AP serving as the switchover destination to execute processing for transmitting user data transmitted by the eNB to the wireless terminal. At this time, the eNB can transmit information that specifies the wireless terminal to the AP.

Furthermore, when the wireless terminal switches the AP serving as the connection destination, the eNB can execute control for transferring user data that has already been transferred to the AP to the AP serving as the switchover destination. For example, the eNB can transmit, to the AP before the connection switching, an instruction for transferring user data that was unable to be transmitted to the wireless terminal to the AP after the switching. Here, when the AP before the connection switching and the AP after the switching are both connected to one WT, user data can be transferred via this one WT without involving the eNB. On the other hand, when a WT connected to the AP before the connection switching is different from a WT connected to the AP after the switching, user data can be transferred from the AP before the switching to the eNB, and then transferred from the eNB to the AP after the switching. Furthermore, when the AP before the connection switching is connected to a first WT and the AP after the switching is connected to a second WT that is different from the first WT, user data may be transferred via a line connecting between the first WT and the second WT without involving the eNB. On the other hand, when the wireless terminal cuts off the wireless LAN connection without switching the AP serving as the connection destination, the eNB can instruct the AP that was connected to the wireless terminal until then to return user data that was unable to be transferred to the wireless terminal to the eNB. Here, the wireless terminal can cut off the wireless LAN connection, for example, when the wireless LAN communication functions have been suspended as mentioned earlier, or when there is no appropriate AP that serves as the switchover destination.

The foregoing transfer processing eliminates the need to retain user data transferred from the eNB to an AP. Normally, there are many APs within a cell formed by one eNB; thus, if the eNB retains user data transferred to the APs until the completion of transmission to the wireless terminal, the capacity of a storage apparatus that is required by the eNB for the retaining purpose could be enormous. In contrast, the foregoing transfer processing can reduce the capacity of a storage apparatus included in the eNB.

Below is a detailed description of the components of a base station apparatus and a wireless terminal that execute the foregoing processing, and a flow of the processing executed by these components.

### (Hardware Components of Base Station Apparatus and Wireless Terminal)

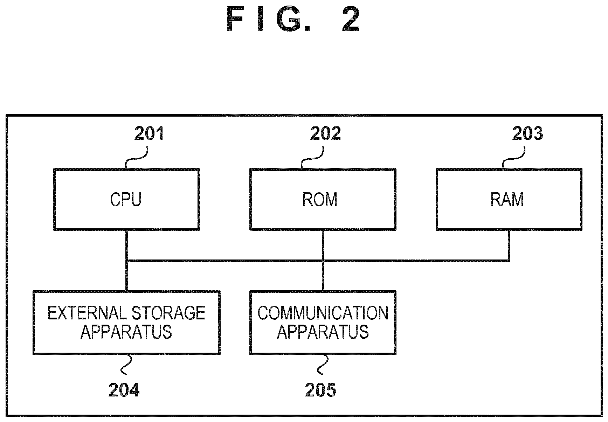

FIG. 2 shows exemplary hardware components of the base station apparatus and the wireless terminal. In one example, the base station apparatus and the wireless terminal include hardware components shown in FIG. 2; for example, they include a CPU 201, a ROM 202, a RAM 203, an external storage apparatus 204, and a communication apparatus 205. In the base station apparatus and the wireless terminal, the CPU 201 executes programs that are recorded in, for example, one of the ROM 202, RAM 203, and external storage apparatus 204 and realize the aforementioned various functions of the base station apparatus and the wireless terminal.

The base station apparatus and the wireless terminal, for example, control the communication apparatus 205 using the CPU 201 so that the base station apparatus and a wireless LAN AP perform communication with the wireless terminal. Furthermore, the base station apparatus, for example, controls the communication apparatus 205 using the CPU 201 to perform communication between the base station apparatus and an AP. Although FIG. 2 shows a schematic diagram in which the base station apparatus and the wireless terminal have one communication apparatus 205, no limitation is intended in this regard. For example, the base station apparatus may include a communication apparatus for communication between the base station apparatus and an AP, and a communication apparatus for the wireless terminal. Furthermore, the wireless terminal includes, for example, a communication apparatus for cellular use and a communication apparatus for wireless LAN use.

Note that the base station apparatus and the wireless terminal may include dedicated hardware that executes various functions; some parts may be executed by hardware, and other parts may be executed by a computer that causes programs to operate. Furthermore, all the functions may be executed by the computer and programs.

### (Functional Components of Base Station Apparatus)

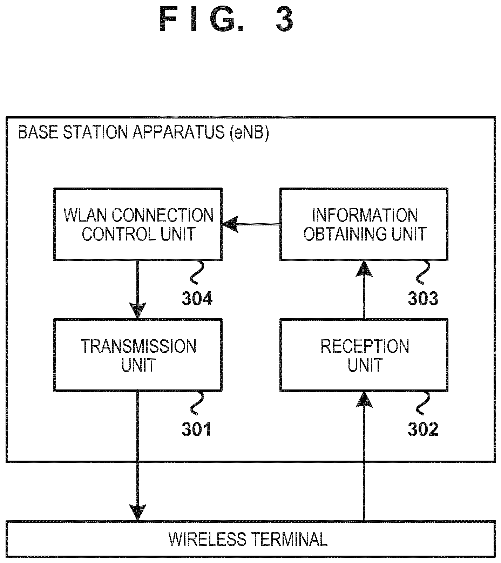

FIG. 3 shows exemplary functional components of the base station apparatus (eNB). As mentioned earlier, although the eNB is, for example, a base station apparatus of LTE, it can be any communication apparatus that can, in a wireless communication system other than LTE, control connection between a wireless terminal connected to the communication apparatus and another apparatus in another wireless communication system. The eNB includes, for example, a transmission unit 301, a reception unit 302, an information obtaining unit 303, and a WLAN connection control unit 304 as its functional components. Although the present example only shows the foregoing functional blocks related to connection control between an AP and the wireless terminal, the eNB naturally has functions of a normal base station apparatus.

The transmission unit 301 transmits wireless signals to the wireless terminal, and the reception unit 302 receives wireless signals from the wireless terminal. Here, the wireless signals transmitted from the base station apparatus to the wireless terminal can include, for example, signals targeted at one wireless terminal, signals targeted at a plurality of wireless terminals, or signals targeted at all wireless terminals. On the other hand, the wireless signals transmitted from the wireless terminal to the base station apparatus are signals addressed to the base station apparatus. Furthermore, the transmission unit 301 transmits wired or wireless signals to the AP (or a WT placed between the eNB and the AP), and the reception unit 302 receives wired or wireless signals from the AP (or a WT placed between the eNB and the AP). Although each of the transmission unit 301 and the reception unit 302 serves as one functional unit that transmits/receives signals to/from the wireless terminal and the AP in the foregoing description, a transmission unit and a reception unit for the wireless terminal can exist separately from a transmission unit and a reception unit for the AP.

The information obtaining unit 303 obtains information related to a reason of the occurrence of a failure when the failure has occurred in connection between the wireless terminal and the wireless LAN AP. For example, the information obtaining unit 303 obtains the information related to the reason of the failure in the connection between the wireless terminal and the AP from the wireless terminal using a wireless signal. As mentioned earlier, the information obtained here can include, for example, information indicating whether the failure in the wireless LAN connection is attributed to suspension of wireless LAN communication functions of the wireless terminal. This information can also include information (e.g., BSSID) for specifying an AP that served as a connection destination until then. Furthermore, when this information indicates that the reason of the failure is not the suspension of the wireless LAN communication functions and the AP serving as the connection destination for the wireless terminal is to be switched, this information can include information that specifies an AP that serves as a connection switchover destination. The WLAN connection control unit 304 executes connection control for the wireless terminal via a wireless LAN. Note that when, for example, the AP serving as the connection destination for the wireless terminal is to be switched, this connection control can include control for transferring, to the AP serving as the connection switchover destination, user data that has not been transmitted from the AP to the wireless terminal.

### (Components of Wireless Terminal)

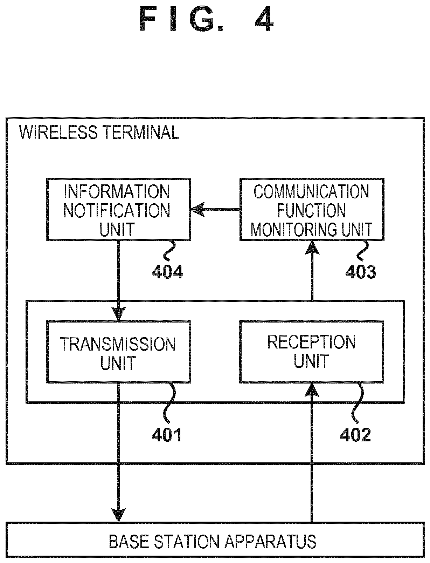

FIG. 4 shows exemplary functional components of a wireless terminal. As mentioned earlier, although the wireless terminal is, for example, a communication apparatus that can perform communication via LTE and a wireless LAN concurrently, it can be any communication apparatus that can, under control of a wireless communication system other than LTE and a wireless LAN, communicate with another apparatus in still another wireless communication system. The wireless terminal includes, for example, a transmission unit 401, a reception unit 402, a communication function monitoring unit 403, and an information notification unit 404 as its functional components. Although the present example only shows the foregoing functional blocks related to connection control between an AP and the wireless terminal, the wireless terminal naturally has functions of a normal wireless terminal.

The transmission unit 401 transmits wireless signals to the eNB and the AP, and the reception unit 402 receives wireless signals from the eNB and the AP. Note that the wireless terminal may include separate transmission units 401 and separate reception units 402 for communication with the eNB and for communication with the AP. In response to an instruction from the eNB, the transmission unit 401 and the reception unit 402 perform wireless LAN communication, in addition to LTE communication, or end the wireless LAN communication. Note that the transmission unit 401 and the reception unit 402 include a portion for LTE communication functions in association with the eNB, and a portion for wireless LAN communication functions in association with the AP. The wireless terminal can suspend the LTE communication functions and the wireless LAN communication functions separately and independently of each other.

The communication function monitoring unit 403 monitors the transmission unit 401 and the reception unit 402, and when, for example, a failure has occurred in the wireless LAN communication, determines where the wireless LAN communication functions have been suspended. Note that when it is determined that the wireless LAN communication functions have not been suspended, the communication function monitoring unit 403 can determine whether the transmission unit 401 and the reception unit 402 have connected to (or whether they are attempting to connect to) an AP that is different from an AP to which they were connected until then without receiving an instruction from the eNB. When the transmission unit 401 and the reception unit 402 have connected to the different AP, this AP is specified.

When the failure has occurred in the wireless LAN communication, the information notification unit 404 generates information of which the eNB is to be notified with reference to a result of the determination made by the communication function monitoring unit 403 as to whether the wireless LAN communication functions have been suspended. That is to say, when the failure has occurred in the wireless LAN communication, the information notification unit 404 generates information indicating whether the reason of the failure is the suspension of the wireless LAN communication functions of the wireless terminal. The information notification unit 404 causes the transmission unit 401 to transmit the generated information. Note that when the failure has occurred in the wireless LAN communication and the reason of the failure is not the suspension of the wireless LAN communication functions of the wireless terminal, if there has been a change in an AP serving as a connection destination without an instruction from the eNB, the information notification unit 404 can notify the eNB of information that specifies this AP.

In the foregoing manner, when a failure has occurred in connection between the wireless terminal and the AP, the eNB obtains information indicating whether the reason of the occurrence of the failure is suspension of the wireless LAN communication functions of the wireless terminal, and controls the wireless LAN connection of the wireless terminal. In this way, the eNB can be prevented from causing the wireless terminal to make an attempt for connection to another AP continuously even though the wireless LAN communication functions of the wireless terminal have been suspended. Furthermore, the eNB can be prevented from causing the wireless terminal to needlessly cut off the wireless LAN connection even though the wireless LAN communication functions of the wireless terminal have not been suspended.

### (Flow of Processing)

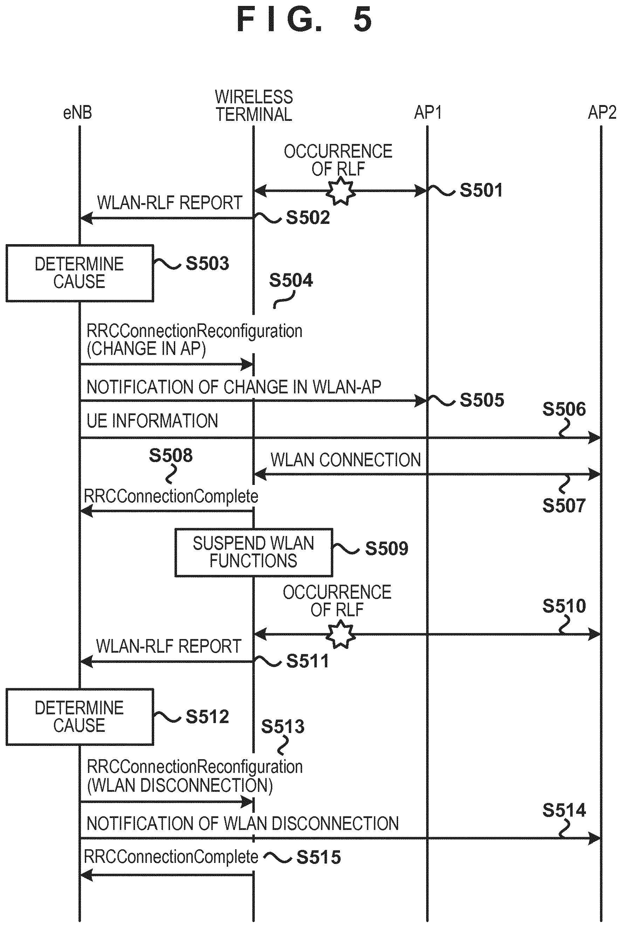

Using FIG. 5, a description is now given of a flow of processing executed in the wireless communication system according to the present embodiment. In the present example, it will be assumed that the wireless terminal is initially connected to the eNB and an AP1. It will also be assumed that, thereafter, a failure has occurred in communication between the wireless terminal and the AP1 (step S501). Then, the wireless terminal transmits a report indicating the reason of the failure to the eNB (step S502). Here, provided that wireless LAN communication functions of the wireless terminal have not been suspended at this point, this report includes, as the reason of the communication failure, the reason other than the suspension of the wireless LAN communication functions of the wireless terminal. Here, provided that the wireless terminal has been able to detect the existence of an AP2 near the wireless terminal, it can include, into this report, information that specifies the AP2 as a candidate for a connection switchover destination. Upon obtaining this report, the eNB determines whether the reason of the communication failure is the suspension of the wireless LAN communication functions of the wireless terminal (step S503) .

In this case, as the wireless terminal can switch from connection to the AP1 to connection to the AP2, the eNB notifies the wireless terminal of an instruction for changing an AP serving as a connection destination (step S504). Although FIG. 5 depicts a case where this changing instruction and the following communication control messages are RRC messages, no limitation is intended in this regard, and messages other than the RRC messages may be used. Furthermore, the eNB notifies the AP1 that served as the connection destination until then of the fact that the wireless LAN connection destination for the wireless terminal can be switched to the AP2 (step S505). At this time, the eNB can instruct the AP1 to transfer untransmitted user data to the AP2 serving as the connection switchover destination. Note that this transfer processing will be described later. Furthermore, the eNB notifies the AP2 of information of the wireless terminal as information of a partner apparatus to which it should be connected (step S506). Thereafter, connection between the wireless terminal and the AP2 is established (step S507). Upon establishing the wireless LAN connection to the AP2, the wireless terminal transmits a message indicating the establishment of the connection to the eNB (step S508).

It will be assumed that, thereafter, the wireless terminal has suspended the wireless LAN communication functions (step S509). Once the wireless terminal has suspended the wireless LAN communication functions, a failure occurs in the wireless LAN communication that the wireless terminal has established with the AP2 at this point (step S510). In this case also, the wireless terminal notifies the eNB of the occurrence of the failure in the wireless LAN communication, and the suspension of the wireless LAN communication functions of the wireless terminal as the reason of the occurrence of the failure (step S511). Upon obtaining this report, the eNB determines whether the reason of the communication failure is the suspension of the wireless LAN communication functions of the wireless terminal (step S512). In this case, as the reason of the communication failure is the suspension of the wireless LAN communication functions of the wireless terminal, the eNB instructs the wireless terminal to stop the wireless LAN connection (step S513). Similarly, the eNB also causes the AP2 to stop the wireless LAN communication with the wireless terminal (step S514). Note that at this time, the eNB can instruct the AP2 to return, to the eNB, user data that has not been transmitted to the wireless terminal. This processing will be described later. Thereafter, the wireless terminal transmits a report indicating the completion of wireless LAN disconnection to the eNB (step S515).

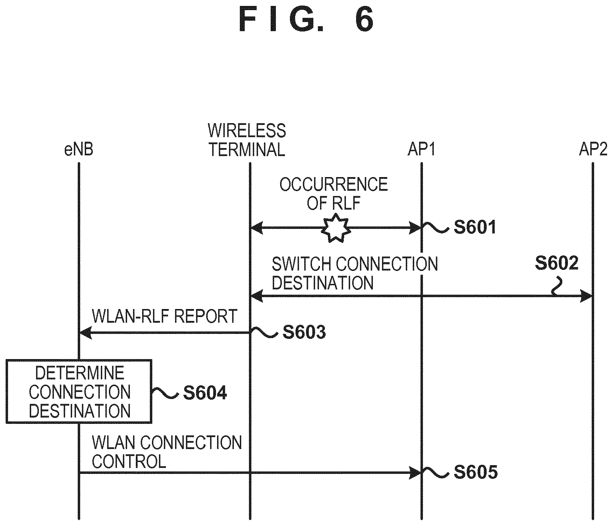

Using FIG. 6, a description is now given of processing in which the wireless terminal autonomously switches an AP that serves as a connection destination. In the present example, it will be assumed that the wireless terminal is initially connected to the eNB and the AP1. It will also be assumed that, thereafter, a failure has occurred in communication between the wireless terminal and the AP1 (step S601). Then, the wireless terminal connects to the AP2, which exists around the wireless terminal and is different from the AP1 that serves as a current connection destination (step S602). Note that at this time, if the AP2 is included among a plurality of APs of which the wireless terminal has been notified by the eNB in advance and which include the AP1, the wireless terminal may be set so as to autonomously switch the connection destination to the AP2. In this case, the wireless terminal can be set so as not to connect to an AP that is not included among the group of APs of which the wireless terminal has been notified by the eNB, even if this AP exists near the wireless terminal. Note that the groups of APs of which the wireless terminal has been notified by the eNB can be APs connected to the same WT.

Once the connection destination has been switched, the wireless terminal transmits, to the eNB, a report of the wireless LAN connection failure including information that specifies the AP2 serving as the connection destination after the switching (step S603). Upon receiving the report, the eNB specifies the connection destination for the wireless terminal after the switching based on the report (step S604). In this case, as the wireless terminal is already connected to the AP2, the eNB can transmit, to the AP2, an instruction for transferring user data transferred by the eNB to the wireless terminal without transmitting an instruction for switching the connection destination to the wireless terminal, for example. Furthermore, the eNB can transmit, to the AP1 that served as the wireless LAN connection destination for the wireless terminal before the switching, control information such as an instruction for transferring untransmitted user data to the AP2 serving as the connection destination after the switching (step S605).

When the wireless terminal has established the wireless LAN connection under control of the eNB, it is not permitted to voluntarily determine wireless LAN disconnection without an instruction from the eNB in some cases. The foregoing processing can prevent the eNB from continuously waiting for the establishment of wireless LAN connection even though the wireless terminal has suspended the wireless LAN communication functions and cannot perform wireless LAN communication. Furthermore, as the eNB can quickly determine wireless LAN disconnection in accordance with a report, user data that has been transferred to an AP but has not been transmitted to the wireless terminal can be quickly retrieved and transmitted to the wireless terminal.

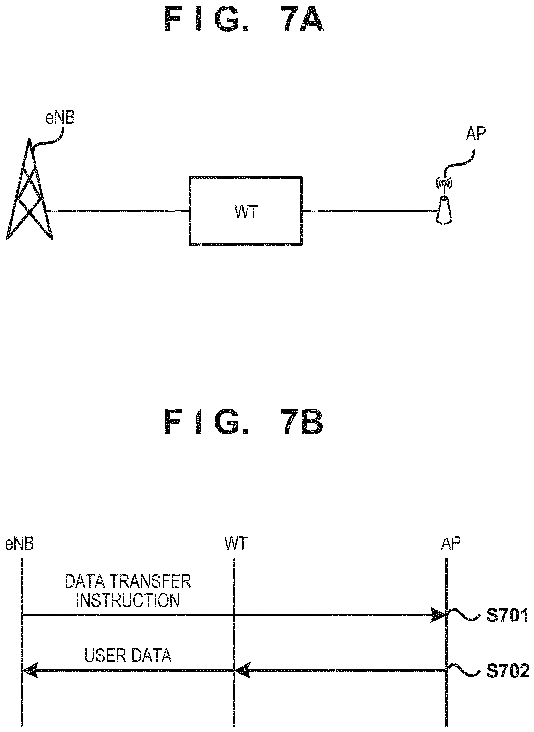

Using FIGS. 7B to 10B, the following describes a flow of user data transfer processing between APs or between APs and the base station in a case where the eNB has executed wireless LAN connection control for the wireless terminal. FIGS. 7A to 10A respectively show exemplary network configurations indicating a connection relationship between the eNB, the APs, and WTs in a case where the processing of FIGS. 7B to 10B is executed. It should be noted here that, as mentioned earlier, the WTs are, for example, network nodes that are placed between the eNB and the APs and fulfill the roles of an interface between LTE and a wireless LAN, and the WTs are not wireless terminals. Furthermore, although FIGS. 7B to 10B illustrate processing for a case where the wireless terminal has switched an AP serving as a connection destination or a case where the wireless terminal has cut off wireless LAN connection, they do not show the wireless terminal because the data transfer processing is executed mainly without involvement of the wireless terminal.

FIG. 7B shows a flow of processing in which an AP transfers, to the eNB, user data that has not been able to be transmitted to the wireless terminal when wireless LAN connection between the wireless terminal and the AP is cut off. The eNB first transmits a data transfer instruction to the AP (step S701). Note that the data transfer instruction can be transmitted together with, for example, an instruction for cutting of connection to the wireless terminal. Here, in one example, it will be assumed that whereas the eNB transmits/receives data of a user plane to/from the AP via a WT, the eNB can transmit/receive a control plane, such as the data transfer instruction, to/from the AP without involving the WT. Upon receiving the data transfer instruction, the AP transmits untransmitted user data to the eNB via the WT (step S702). The WT may retain user data that has been transferred from the eNB to one of APs connected to the WT and that is to be transferred to the wireless terminal. In this case, the WT retains the untransmitted user data in the AP even if the wireless LAN connection between the AP and the wireless terminal has been cut off. Therefore, the eNB may transmit, to the WT instead of the AP, an instruction for returning the retained user data to the eNB. Note that in this case, although the untransmitted user data in the AP need not be transferred to the WT in step S702, the AP can notify the WT of which user data has not been transmitted yet. Then, the WT can extract, from the retained user data, user data that has not been transmitted yet according to the notification, and transmit the extracted user data to the eNB. In this way, when the wireless LAN connection of the wireless terminal has been cut off, user data that was intended to be transmitted to the wireless terminal via a wireless LAN can be reliably transmitted to the wireless terminal via the eNB.

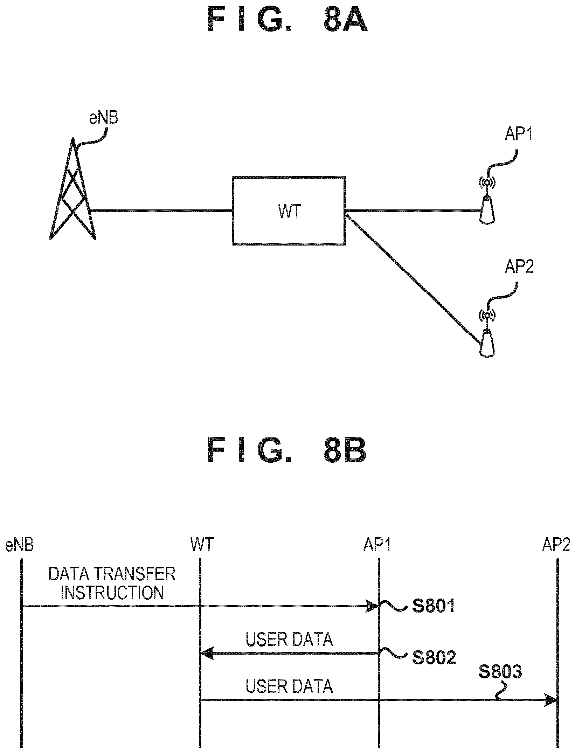

FIG. 8B shows an example of user data transfer processing for a case where a connection destination for the wireless terminal under wireless LAN communication is switched from an AP1 to an AP2. Here, the processing of FIG. 8B represents processing for a case where the AP1 and the AP2 are connected to the same WT as shown in FIG. 8A. In the present processing, once the eNB has transmitted a data transfer instruction to the AP1 (step S801), the AP1 transmits user data to the AP2 via the WT (steps S802, S803). In the present example, the WT can obtain the data transfer instruction of step S801, transfer the same to the AP1, obtain untransmitted user data from the AP1 in response to the obtained data transfer instruction, and transfer the user data to the AP2. The WT may retain user data that has been transferred from the eNB to one of APs connected to the WT and that is to be transferred to the wireless terminal. In this case, the WT retains the untransmitted user data in the AP1 even if wireless LAN connection between the AP1 and the wireless terminal is cut off. Therefore, the eNB may transmit, to the WT instead of the AP1, an instruction for transferring the retained user data to the AP2. Note that in this case, although the untransmitted user data in the AP1 need not be transferred to the WT in step S802, the AP1 can notify the WT of which user data has not been transmitted yet. Then, the WT can extract, from the retained user data, user data that has not been transmitted yet according to the notification, and transmit the extracted user data to the AP2. In this way, user data is transferred without involving the eNB, and thus the processing load on the eNB can be reduced.

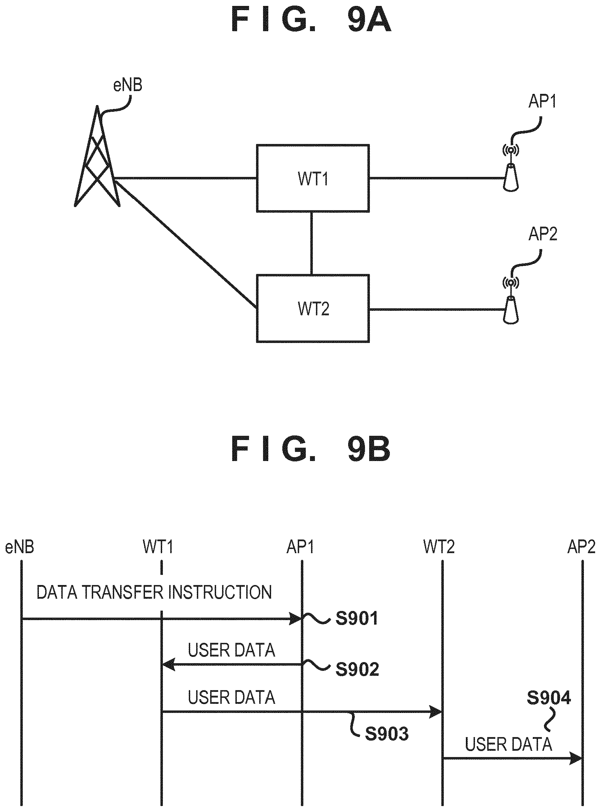

FIG. 9B also shows an example of user data transfer processing for a case where a connection destination for the wireless terminal under wireless LAN communication is switched from an AP1 to an AP2. Here, the processing of FIG. 9B represents processing for a case where the AP1 and the AP2 are connected to different WTs (WT1, WT2) and there is a line connecting between the WT1 and WT2 as shown in FIG. 9A. In the present processing, once the eNB has transmitted a data transfer instruction to the AP1 (step S901), the AP1 transmits user data to the WT1 (step S902), and the WT1 transfers the user data to the WT2 without involving the eNB (step S903). Then, the WT2 transmits the transferred user data to the AP2 (step S904). In this case also, the WT1 can obtain the data transfer instruction of step S901, transfer the same to the AP1, obtain untransmitted user data from the AP1 in response to the obtained data transfer instruction, and transfer the user data to the WT2. The WT1 may retain user data that has been transferred from the eNB to one of APs connected to the WT1 and that is to be transferred to the wireless terminal. In this case, the WT1 retains the untransmitted user data in the AP1 even if wireless LAN connection between the AP1 and the wireless terminal is cut off. Therefore, the eNB may transmit, to the WT1 instead of the AP1, an instruction for transferring the retained user data to the AP2 via the WT2. Note that in this case, although the untransmitted user data in the AP1 need not be transferred to the WT1 in step S902, the AP1 can notify the WT1 of which user data has not been transmitted yet. Then, the WT1 can extract, from the retained user data, user data that has not been transmitted yet according to the notification, and transmit the extracted user data to the WT2. In this way, user data is transferred without involving the eNB, and thus the processing load on the eNB can be reduced.

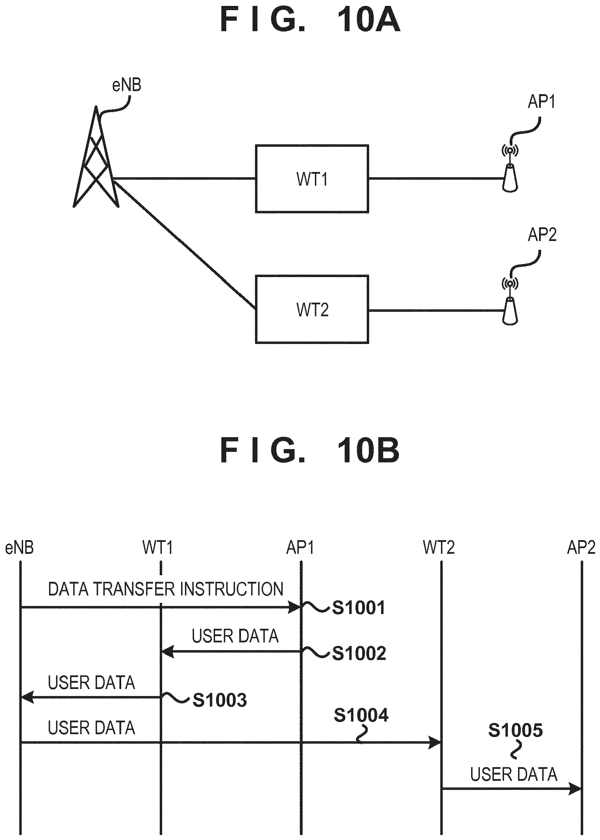

FIG. 10B also shows an example of user data transfer processing for a case where a connection destination for the wireless terminal under wireless LAN communication is switched from an AP1 to an AP2. Here, the processing of FIG. 10B represents processing for a case where the AP1 and the AP2 are connected to different WTs (WT1, WT2) but there is no line connecting between the WT1 and WT2 as shown in FIG. 10A. In the present processing, once the eNB has transmitted a data transfer instruction to the AP1 (step S1001), the AP1 transmits user data to the WT1 (step S1002), and the WT1 transmits the received user data to the eNB (step S1003). Then, the eNB transfers the received user data to the WT2 (step S1004), and the WT2 transmits the transferred user data to the AP2 (step S1005). In this case also, the WT1 can obtain the data transfer instruction of step S1001, transfer the same to the AP1, obtain untransmitted user data from the AP1 in response to the obtained data transfer instruction, and transfer the user data to the eNB. The WT1 may retain user data that has been transferred from the eNB to one of APs connected to the WT1 and that is to be transferred to the wireless terminal. In this case, the WT1 retains the untransmitted user data in the AP1 even if wireless LAN connection between the AP1 and the wireless terminal is cut off. Therefore, the eNB may instruct the WT1, instead of the AP1, to return the retained user data to the eNB. Note that in this case, although the untransmitted user data in the AP1 need not be transferred to the WT1 in step S1002, the AP1 can notify the WT1 of which user data has not been transmitted yet. Then, the WT1 can extract, from the retained user data, user data that has not been transmitted yet according to the notification, and transmit the extracted user data to the eNB. In this way, even when there is no line connecting between the WT1 and the WT2, user data can be reliably transmitted to the wireless terminal via an AP that serves as a connection switchover destination under a wireless LAN.

As described above, in the present embodiment, when a failure has occurred in connection in a second system (e.g., a wireless LAN) while a wireless terminal is performing communication in the second system under control of a first system (e.g., LTE), a base station in the first system obtains the reason of the failure. In this way, the base station in the first system can appropriately execute connection control involving, for example, whether to make the wireless terminal continue communication in the second system thereafter.

Note that the aforementioned eNB may be replaced by some sort of control apparatus. That is to say, the eNB need not be a base station apparatus as long as it is an apparatus that can appropriately execute connection control on the wireless LAN (second system) side in accordance with the reason of the occurrence of a failure in a wireless LAN. Similarly, the aforementioned terms are used for the sake of explanation, and are not intended to limit the scope of the present invention to processing associated with simultaneous communication under LTE and a wireless LAN.

The present invention is not limited to the above embodiment and various changes and modifications can be made within the scope of the present invention as defined in the appended claims.

## Claims

1. A base station apparatus in a wireless communication system that includes the base station apparatus and a terminal capable of connecting to the base station apparatus in a first system and connecting to another apparatus in a second system, the base station apparatus comprising:
obtainment means (303) for, when a failure has occurred in connection in the second system between the terminal and the another apparatus, obtaining, from the terminal, a report that includes a first part indicating a reason of failure occurrence and a second part indicating a candidate apparatus for a connection switchover destination in the second system;
determination means for determining whether or not the reason of failure occurrence is suspension of communication functions of the terminal in the second system; and
control means (304) for performing a first connection control wherein in the first connection control, a connection of the terminal in the second system is stopped by transmitting an instruction to stop the connection to the terminal and the another apparatus, and by receiving, from the terminal, a report indicating that the connection is stopped in a case where it is determined that the reason of failure occurrence is suspension of communication functions of the terminal in the second system, and
a second connection control based on the second part in the obtained report, wherein in the second connection control, a connection of the terminal with the another apparatus is switched to a connection with the candidate apparatus, by transmitting, to the terminal, the another apparatus, and the candidate apparatus, a notification for changing a connection destination of the terminal in the second system from the another apparatus to the candidate apparatus, and by receiving from the terminal a message indicating that a connection between the terminal and the candidate apparatus has been established in a case where it is determined that the reason of failure occurrence is not suspension of communication functions of the terminal in the second system.

2. The base station apparatus according to claim 1 wherein
when the information indicates that the failure has occurred due to a reason other than suspension of communication functions of the terminal in the second system and the terminal is to switch an apparatus serving as a connection destination in the second system to a second another apparatus different from the another apparatus, the control means (304) is configured to cause transfer of data to be transmitted to the terminal from the another apparatus to the second another apparatus.

3. The base station apparatus according to claim 2 wherein
when the information indicates that the failure has occurred due to a reason other than suspension of communication functions of the terminal in the second system and the another apparatus and the second another apparatus are connected to one apparatus placed between the first system and the second system, the control means (304) is configured to instruct the another apparatus to transfer the data from the another apparatus to the second another apparatus via the one apparatus without involving the base station apparatus.

4. The base station apparatus according to claim 2 or 3 wherein
when the information indicates that the failure has occurred due to a reason other than suspension of communication functions of the terminal in the second system and the second another apparatus is not connected to one apparatus to which the another apparatus is connected and which is placed between the first system and the second system, the control means (304) is configured to instruct the another apparatus to transfer the data via the base station apparatus.

5. The base station apparatus according to claim 2 or 3 wherein
when the information indicates that the failure has occurred due to a reason other than suspension of communication functions of the terminal in the second system, the another apparatus is connected to a first apparatus placed between the first system and the second system, and the second another apparatus is connected to a second apparatus different from the first apparatus placed between the first system and the second system, the control means (304) is configured to instruct the another apparatus to transfer the data via a line connecting between the first apparatus and the second apparatus without involving the base station apparatus.

6. The base station apparatus according to claim 1 wherein
when the information indicates that the failure has occurred due to suspension of communication functions of the terminal in the second system, or when the information indicates that the failure has occurred due to a reason other than suspension of communication functions of the terminal in the second system and the terminal is not to switch an apparatus serving as a connection destination in the second system, the control means (304) is configured to instruct the another apparatus to transmit, to the base station apparatus, data to be transmitted to the terminal.

7. A terminal in a wireless communication system that includes a base station apparatus and the terminal the terminal being capable of connecting to the base station apparatus in a first system and connecting to another apparatus in a second system, the terminal comprising:
notification means (404) for, when a failure has occurred in connection in the second system between the terminal and the another apparatus, notifying the base station apparatus of a report that includes a first part indicating a reason of failure occurrence and a second part indicating a candidate apparatus for a connection switchover destination in the second system; and
communication means (401, 402) for performing control of a connection in the second system by performing, in accordance with a signal received from the base station,
a first connection control wherein in the first connection control, a connection of the terminal in the second system is stopped by receiving, from the base station apparatus, an instruction to stop the connection, and by transmitting, to the base station apparatus, a report indicating that the connection is stopped in a case where the reason of failure occurrence is suspension of communication functions of the terminal in the second system, and
a second connection control based on the second part in the obtained report, wherein in the second connection control, a connection of the terminal with the another apparatus is switched to a connection with the candidate apparatus, by receiving, from the base station apparatus, a notification for changing a connection destination of the terminal in the second system from the another apparatus to the candidate apparatus, by establishing connection with the candidate apparatus based on the received notification, and by transmitting to the base station apparatus a message indicating that a connection between the terminal and the candidate apparatus has been established in a case where the reason of failure occurrence is not suspension of communication functions of the terminal in the second system.

8. A control method for a base station apparatus in a wireless communication system that includes the base station apparatus and a terminal capable of connecting to the base station apparatus in a first system and connecting to another apparatus in a second system, the control method comprising:
when a failure has occurred in connection in the second system between the terminal and the another apparatus, obtaining (S502, S511), from the terminal, a report that includes a first part indicating a reason of failure occurrence and a second part indicating a candidate apparatus for a connection switchover destination in the second system;
determining (S503, S512) whether or not the reason of failure occurrence is suspension of communication functions of the terminal in the second system;
performing (S513-S515) a first connection control wherein in the first connection control, a connection of the terminal in the second system is stopped by transmitting an instruction to stop the connection to the terminal and the another apparatus, and by receiving, from the terminal, a report indicating that the connection is stopped in a case where it is determined that the reason of failure occurrence is suspension of communication functions of the terminal in the second system; and
performing (S504-S508) a second connection control based on the second part in the obtained report, wherein in the second connection control, a connection of the terminal with the another apparatus is switched to a connection with the candidate apparatus, by transmitting, to the terminal, the another apparatus, and the candidate apparatus, a notification for changing a connection destination of the terminal in the second system from the another apparatus to the candidate apparatus, and by receiving from the terminal a message indicating that a connection between the terminal and the candidate apparatus has been established in a case where it is determined that the reason of failure occurrence is not suspension of communication functions of the terminal in the second system.

9. A control method for a terminal in a wireless communication system that includes a base station apparatus and the terminal the terminal being capable of connecting to the base station apparatus in a first system and connecting to another apparatus in a second system, the control method comprising:
when a failure has occurred in connection in the second system between the terminal and the another apparatus, notifying (S502, S511) the base station apparatus of a report that includes a first part indicating a reason of failure occurrence and a second part indicating a candidate apparatus for a connection switchover destination in the second system; and
performing control of a connection in the second system by performing, in accordance with a signal received from the base station,
a first connection control wherein in the first connection control, a connection of the terminal in the second system is stopped by receiving (S513), from the base station apparatus, an instruction to stop the connection, and by transmitting (S515), to the base station apparatus, a report indicating that the connection is stopped in a case where the reason of failure occurrence is suspension of communication functions of the terminal in the second system, and
a second connection control based on the second part in the obtained report, wherein in the second connection control, a connection of the terminal with the another apparatus is switched to a connection with the candidate apparatus, by receiving (S504), from the base station apparatus, a notification for changing a connection destination of the terminal in the second system from the another apparatus to the candidate apparatus, by establishing (S507) connection with the candidate apparatus based on the received notification, and by transmitting (S508) to the base station apparatus a message indicating that a connection between the terminal and the candidate apparatus has been established in a case where the reason of failure occurrence is not suspension of communication functions of the terminal in the second system.

10. A program for causing a computer provided for a base station apparatus in a wireless communication system to execute all the steps of the method of claim 8 wherein the wireless communication system includes the base station apparatus and a terminal capable of connecting to the base station apparatus in a first system and connecting to another apparatus in a second system.

11. A program for causing a computer provided for a terminal in a wireless communication system to execute all the steps of the method of claim 9 wherein the wireless communication system includes a base station apparatus and terminal and wherein the terminal is capable of connecting to the base station apparatus in a first system and connecting to another apparatus in a second system.

## Patentansprüche

1. Basisstationsvorrichtung in einem drahtlosen Kommunikationssystem, das die Basisstationsvorrichtung und ein Endgerät, das fähig ist, mit der Basisstationsvorrichtung in einem ersten System verbunden zu werden und mit einer anderen Vorrichtung in einem zweiten System verbunden zu werden, beinhaltet, wobei die Basisstationsvorrichtung Folgendes umfasst:
ein Erlangungsmittel (303) zum Erlangen, wenn eine Störung der Verbindung in dem zweiten System zwischen dem Endgerät und der anderen Vorrichtung vorgekommen ist, von dem Endgerät, eines Berichts, der einen ersten Teil, der einen Grund für das Störungsvorkommen angibt, und einen zweiten Teil, der eine Kandidatenvorrichtung für ein Verbindungsumschaltungsziel in dem zweiten System angibt, beinhaltet;
ein Bestimmungsmittel zum Bestimmen, ob der Grund für das Störungsvorkommen eine Aussetzung von Kommunikationsfunktionen des Endgeräts in dem zweiten System ist oder nicht; und
ein Steuerungsmittel (304) zum Durchführen einer ersten Verbindungssteuerung, wobei in der ersten Verbindungssteuerung, in einem Fall, bei dem bestimmt wird, dass der Grund für das Störungsvorkommen eine Aussetzung von Kommunikationsfunktionen des Endgeräts in dem zweiten System ist, eine Verbindung des Endgeräts in dem zweiten System durch Übertragen einer Anweisung an das Endgerät und die andere Vorrichtung, die Verbindung abzubrechen, und durch Empfangen, von dem Endgerät, eines Berichts, der angibt, dass die Verbindung abgebrochen ist, abgebrochen wird, und
einer zweiten Verbindungssteuerung basierend auf dem zweiten Teil in dem erlangten Bericht, wobei in der zweiten Verbindungssteuerung, in einem Fall, bei dem bestimmt wird, dass der Grund für das Störungsvorkommen keine Aussetzung von Kommunikationsfunktionen des Endgeräts in dem zweiten System ist, eine Verbindung des Endgeräts mit der anderen Vorrichtung durch Übertragen an das Endgerät, die andere Vorrichtung und die Kandidatenvorrichtung einer Mitteilung zum Ändern eines Verbindungsziels des Endgeräts in dem zweiten System von der anderen Vorrichtung auf die Kandidatenvorrichtung und durch Empfangen von dem Endgerät einer Nachricht, die angibt, dass eine Verbindung zwischen dem Endgerät und der Kandidatenvorrichtung hergestellt wurde, auf eine Verbindung mit der Kandidatenvorrichtung umgeschaltet wird.

2. Basisstationsvorrichtung gemäß Anspruch 1, wobei, wenn die Informationen angeben, dass die Störung wegen eines Grundes vorgekommen ist, der sich von einer Aussetzung von Kommunikationsfunktionen des Endgeräts in dem zweiten System unterscheidet, und das Endgerät eine Vorrichtung, die als Verbindungsziel in dem zweiten System dient, auf eine zweite andere Vorrichtung, die sich von der anderen Vorrichtung unterscheidet, umschalten soll, das Steuerungsmittel (304) konfiguriert ist, um einen Transfer von Daten, die von dem Endgerät zu übertragen sind, von der anderen Vorrichtung auf die zweite andere Vorrichtung zu bewirken.

3. Basisstationsvorrichtung gemäß Anspruch 2, wobei, wenn die Informationen angeben, dass die Störung wegen eines Grundes vorgekommen ist, der sich von einer Aussetzung von Kommunikationsfunktionen des Endgeräts in dem zweiten System unterscheidet, und die andere Vorrichtung und die zweite andere Vorrichtung mit einer Vorrichtung verbunden sind, die zwischen dem ersten System und dem zweiten System platziert ist, das Steuerungsmittel (304) konfiguriert ist, um die andere Vorrichtung anzuweisen, die Daten von der anderen Vorrichtung auf die zweite andere Vorrichtung über die eine Vorrichtung zu transferieren, ohne die Basisstationsvorrichtung zu involvieren.

4. Basisstationsvorrichtung gemäß Anspruch 2 oder 3, wobei, wenn die Informationen angeben, dass die Störung wegen eines Grundes vorgekommen ist, der sich von einer Aussetzung von Kommunikationsfunktionen des Endgeräts in dem zweiten System unterscheidet, und die zweite andere Vorrichtung nicht mit einer Vorrichtung verbunden ist, mit der die andere Vorrichtung verbunden ist und die zwischen dem ersten System und dem zweiten System platziert ist, das Steuerungsmittel (304) konfiguriert ist, um die andere Vorrichtung anzuweisen, die Daten über die Basisstationsvorrichtung zu transferieren.

5. Basisstationsvorrichtung gemäß Anspruch 2 oder 3, wobei, wenn die Informationen angeben, dass die Störung wegen eines Grundes vorgekommen ist, der sich von einer Aussetzung von Kommunikationsfunktionen des Endgeräts in dem zweiten System unterscheidet, die andere Vorrichtung mit einer ersten Vorrichtung verbunden ist, die zwischen dem ersten System und dem zweiten System platziert ist, und die zweite andere Vorrichtung mit einer zweiten Vorrichtung verbunden ist, die sich von der ersten Vorrichtung, die zwischen dem ersten System und dem zweiten System platziert ist, unterscheidet, das Steuerungsmittel (304) konfiguriert ist, um die andere Vorrichtung anzuweisen, die Daten über eine Leitung zu übertragen, die zwischen der ersten Vorrichtung und der zweiten Vorrichtung verbindet, ohne die Basisstationsvorrichtung zu involvieren.

6. Basisstationsvorrichtung gemäß Anspruch 1, wobei, wenn die Informationen angeben, dass die Störung aufgrund einer Aussetzung der Kommunikationsfunktionen des Endgeräts in dem zweiten System vorgekommen ist, oder wenn die Informationen angeben, dass die Störung wegen eines Grundes vorgekommen ist, der sich von einer Aussetzung von Kommunikationsfunktionen des Endgeräts in dem zweiten System unterscheidet, und das Endgerät eine Vorrichtung, die als Verbindungsziel in dem zweiten System dient, nicht umschalten soll, das Steuerungsmittel (304) konfiguriert ist, um die andere Vorrichtung anzuweisen, an die Basisstationsvorrichtung Daten zu übertragen, die an das Endgerät zu übertragen sind.

7. Endgerät in einem drahtlosen Kommunikationssystem, das eine Basisstationsvorrichtung und das Endgerät beinhaltet, wobei das Endgerät fähig ist, mit der Basisstationsvorrichtung in einem ersten System verbunden zu werden und mit einer anderen Vorrichtung in einem zweiten System verbunden zu werden, wobei das Endgerät Folgendes umfasst:
ein Mitteilungsmittel (404) zum Mitteilen, wenn eine Störung der Verbindung in dem zweiten System zwischen dem Endgerät und der anderen Vorrichtung vorgekommen ist, der Basisstationsvorrichtung eines Berichts, der einen ersten Teil, der einen Grund für das Störungsvorkommen angibt, und einen zweiten Teil, der eine Kandidatenvorrichtung für ein Verbindungsumschaltungsziel in dem zweiten System angibt, beinhaltet; und
ein Kommunikationsmittel (401, 402) zum Durchführen einer Steuerung einer Verbindung in dem zweiten System durch Durchführen, in Übereinstimmung mit einem von der Basisstation empfangenen Signal,
einer ersten Verbindungssteuerung, wobei in der ersten Verbindungssteuerung, in einem Fall, bei dem bestimmt wird, dass der Grund für das Störungsvorkommen eine Aussetzung von Kommunikationsfunktionen des Endgeräts in dem zweiten System ist, eine Verbindung des Endgeräts in dem zweiten System durch Empfangen, von der Basisstationsvorrichtung, einer Anweisung, die Verbindung abzubrechen, und durch Übertragen, an die Basisstationsvorrichtung, eines Berichts, der angibt, dass die Verbindung abgebrochen ist, abgebrochen wird, und
einer zweiten Verbindungssteuerung basierend auf dem zweiten Teil in dem erlangten Bericht, wobei in der zweiten Verbindungssteuerung, in einem Fall, bei dem der Grund für das Störungsvorkommen keine Aussetzung von Kommunikationsfunktionen des Endgeräts in dem zweiten System ist, eine Verbindung des Endgeräts mit der anderen Vorrichtung durch Empfangen, von der Basisstationsvorrichtung, einer Mitteilung zum Ändern eines Verbindungsziels des Endgeräts in dem zweiten System von der anderen Vorrichtung auf die Kandidatenvorrichtung, durch Herstellen einer Verbindung mit der Kandidatenvorrichtung basierend auf empfangenen Mitteilung und durch Übertragen an die Basisstationsvorrichtung einer Nachricht, die angibt, dass eine Verbindung zwischen dem Endgerät und der Kandidatenvorrichtung hergestellt wurde, auf eine Verbindung mit der Kandidatenvorrichtung umgeschaltet wird.

8. Steuerungsverfahren für eine Basisstationsvorrichtung in einem drahtlosen Kommunikationssystem, das die Basisstationsvorrichtung und ein Endgerät, das fähig ist, mit der Basisstationsvorrichtung in einem ersten System verbunden zu werden und mit einer anderen Vorrichtung in einem zweiten System verbunden zu werden, beinhaltet, wobei das Steuerungsverfahren Folgendes umfasst:
wenn eine Störung der Verbindung in dem zweiten System zwischen dem Endgerät und der anderen Vorrichtung vorgekommen ist, Erlangen (S502, S511), von dem Endgerät, eines Berichts, der einen ersten Teil, der einen Grund für das Störungsvorkommen angibt, und einen zweiten Teil, der eine Kandidatenvorrichtung für ein Verbindungsumschaltungsziel in dem zweiten System angibt, beinhaltet;
Bestimmen (S503, S512), ob der Grund für das Störungsvorkommen eine Aussetzung von Kommunikationsfunktionen des Endgeräts in dem zweiten System ist oder nicht;
Durchführen (S513-S515) einer ersten Verbindungssteuerung, wobei in der ersten Verbindungssteuerung, in einem Fall, bei dem bestimmt wird, dass der Grund für das Störungsvorkommen eine Aussetzung von Kommunikationsfunktionen des Endgeräts in dem zweiten System ist, eine Verbindung des Endgeräts in dem zweiten System durch Übertragen einer Anweisung an das Endgerät und die andere Vorrichtung, die Verbindung abzubrechen, und durch Empfangen, von dem Endgerät, eines Berichts, der angibt, dass die Verbindung abgebrochen ist, abgebrochen wird; und
Durchführen (S504-S508) einer zweiten Verbindungssteuerung basierend auf dem zweiten Teil in dem erlangten Bericht, wobei in der zweiten Verbindungssteuerung, in einem Fall, bei dem bestimmt wird, dass der Grund für das Störungsvorkommen keine Aussetzung von Kommunikationsfunktionen des Endgeräts in dem zweiten System ist, eine Verbindung des Endgeräts mit der anderen Vorrichtung durch Übertragen an das Endgerät, die andere Vorrichtung und die Kandidatenvorrichtung einer Mitteilung zum Ändern eines Verbindungsziels des Endgeräts in dem zweiten System von der anderen Vorrichtung auf die Kandidatenvorrichtung und durch Empfangen von dem Endgerät einer Nachricht, die angibt, dass eine Verbindung zwischen dem Endgerät und der Kandidatenvorrichtung hergestellt wurde, auf eine Verbindung mit der Kandidatenvorrichtung umgeschaltet wird.

9. Steuerungsverfahren für ein Endgerät in einem drahtlosen Kommunikationssystem, das eine Basisstationsvorrichtung und das Endgerät beinhaltet, wobei das Endgerät fähig ist, mit der Basisstationsvorrichtung in einem ersten System verbunden zu werden und mit einer anderen Vorrichtung in einem zweiten System verbunden zu werden, wobei das Steuerungsverfahren Folgendes umfasst:
wenn eine Störung der Verbindung in dem zweiten System zwischen dem Endgerät und der anderen Vorrichtung vorgekommen ist, Mitteilen der (S502, S511) Basisstationsvorrichtung eines Berichts, der einen ersten Teil, der einen Grund für das Störungsvorkommen angibt, und einen zweiten Teil, der eine Kandidatenvorrichtung für ein Verbindungsumschaltungsziel in dem zweiten System angibt, beinhaltet; und
Durchführen einer Steuerung einer Verbindung in dem zweiten System durch Durchführen, in Übereinstimmung mit einem von der Basisstation empfangenen Signal,
einer ersten Verbindungssteuerung, wobei in der ersten Verbindungssteuerung, in einem Fall, bei dem bestimmt wird, dass der Grund für das Störungsvorkommen eine Aussetzung von Kommunikationsfunktionen des Endgeräts in dem zweiten System ist, eine Verbindung des Endgeräts in dem zweiten System durch Empfangen (S513), von der Basisstationsvorrichtung, einer Anweisung, die Verbindung abzubrechen, und durch Übertragen (S515), an die Basisstationsvorrichtung, eines Berichts, der angibt, dass die Verbindung abgebrochen ist, abgebrochen wird, und
einer zweiten Verbindungssteuerung basierend auf dem zweiten Teil in dem erlangten Bericht, wobei in der zweiten Verbindungssteuerung, in einem Fall, bei dem der Grund für das Störungsvorkommen keine Aussetzung von Kommunikationsfunktionen des Endgeräts in dem zweiten System ist, eine Verbindung des Endgeräts mit der anderen Vorrichtung durch Empfangen (S504), von der Basisstationsvorrichtung, einer Mitteilung zum Ändern eines Verbindungsziels des Endgeräts in dem zweiten System von der anderen Vorrichtung auf die Kandidatenvorrichtung, durch Herstellen (S507) einer Verbindung mit der Kandidatenvorrichtung basierend auf empfangenen Mitteilung und durch Übertragen (S508) an die Basisstationsvorrichtung einer Nachricht, die angibt, dass eine Verbindung zwischen dem Endgerät und der Kandidatenvorrichtung hergestellt wurde, auf eine Verbindung mit der Kandidatenvorrichtung umgeschaltet wird.

10. Programm zum Veranlassen eines Computers, der für eine Basisstationsvorrichtung in einem drahtlosen Kommunikationssystem bereitgestellt ist, alle Schritte des Verfahrens nach Anspruch 8 auszuführen, wobei das drahtlose Kommunikationssystem die Basisstationsvorrichtung und ein Endgerät, das fähig ist, mit der Basisstationsvorrichtung in einem ersten System verbunden zu werden und mit einer anderen Vorrichtung in einem zweiten System verbunden zu werden, beinhaltet.

11. Programm zum Veranlassen eines Computers, der für ein Endgerät in einem drahtlosen Kommunikationssystem bereitgestellt ist, alle Schritte des Verfahrens nach Anspruch 9 auszuführen, wobei das drahtlose Kommunikationssystem eine Basisstationsvorrichtung und das Endgerät beinhaltet, wobei das Endgerät fähig ist, mit der Basisstationsvorrichtung in einem ersten System verbunden zu werden und mit einer anderen Vorrichtung in einem zweiten System verbunden zu werden.

## Revendications

1. Appareil de station de base dans un système de communication sans fil qui inclut l'appareil de station de base et un terminal apte à se connecter à l'appareil de station de base dans un premier système et se connecter à un autre appareil dans un deuxième système, l'appareil de station de base comprenant :
des moyens d'obtention (303) pour, lorsqu'une défaillance s'est produite dans une connexion dans le deuxième système entre le terminal et ledit autre appareil, obtenir, à partir du terminal, un rapport qui inclut une première partie indiquant une raison de l'occurrence de la défaillance et une deuxième partie indiquant un appareil candidat pour une destination de basculement de connexion dans le deuxième système ;
des moyens de détermination pour déterminer si la raison de l'occurrence de la défaillance est ou non une suspension des fonctions de communication du terminal dans le deuxième système ; et
des moyens de commande (304) pour réaliser
une première commande de connexion, où dans la première commande de connexion, une connexion du terminal dans le deuxième système est arrêtée grâce à la transmission d'une instruction pour arrêter la connexion vers le terminal et ledit autre appareil, et grâce à la réception, à partir du terminal, d'un rapport indiquant que la connexion est arrêtée dans un cas où il est déterminé que la raison de l'occurrence de la défaillance est une suspension des fonctions de communication du terminal dans le deuxième système, et
une deuxième commande de connexion basée sur la deuxième partie dans le rapport obtenu, où dans la deuxième commande de connexion, une connexion du terminal avec ledit autre appareil est commutée vers une connexion avec l'appareil candidat, grâce à la transmission, vers le terminal, ledit autre appareil, et l'appareil candidat, d'une notification pour changer une destination de connexion du terminal dans le deuxième système à partir dudit autre appareil jusqu'à l'appareil candidat, et grâce à la réception à partir du terminal d'un message indiquant qu'une connexion entre le terminal et l'appareil candidat a été établie dans un cas où il est déterminé que la raison de l'occurrence de la défaillance n'est pas une suspension des fonctions de communication du terminal dans le deuxième système.

2. Appareil de station de base selon la revendication 1 dans lequel
lorsque les informations indiquent que la défaillance s'est produite à cause d'une raison autre qu'une suspension des fonctions de communication du terminal dans le deuxième système et que le terminal doit commuter un appareil servant de destination de connexion dans le deuxième système vers un deuxième autre appareil qui est différent dudit autre appareil, les moyens de commande (304) sont configurés pour provoquer un transfert de données devant être transmises au terminal à partir dudit autre appareil vers le deuxième autre appareil.

3. Appareil de station de base selon la revendication 2 dans lequel
lorsque les informations indiquent que la défaillance s'est produite à cause d'une raison autre qu'une suspension des fonctions de communication du terminal dans le deuxième système et que ledit autre appareil et le deuxième autre appareil sont connectés à un appareil placé entre le premier système et le deuxième système, les moyens de commande (304) sont configurés pour ordonner audit autre appareil de transférer les données à partir dudit autre appareil vers le deuxième autre appareil via ledit un appareil sans faire intervenir l'appareil de station de base.

4. Appareil de station de base selon la revendication 2 ou 3 dans lequel
lorsque les informations indiquent que la défaillance s'est produite à cause d'une raison autre qu'une suspension des fonctions de communication du terminal dans le deuxième système et que le deuxième autre appareil n'est pas connecté à un appareil auquel ledit autre appareil est connecté et qui est placé entre le premier système et le deuxième système, les moyens de commande (304) sont configurés pour ordonner audit autre appareil de transférer les données via l'appareil de station de base.

5. Appareil de station de base selon la revendication 2 ou 3 dans lequel
lorsque les informations indiquent que la défaillance s'est produite à cause d'une raison autre qu'une suspension des fonctions de communication du terminal dans le deuxième système, ledit autre appareil est connecté à un premier appareil placé entre le premier système et le deuxième système, et le deuxième autre appareil est connecté à un deuxième appareil qui est différent du premier appareil placé entre le premier système et le deuxième système, les moyens de commande (304) sont configurés pour ordonner audit autre appareil de transférer les données via une ligne se connectant entre le premier appareil et le deuxième appareil sans faire intervenir l'appareil de station de base.

6. Appareil de station de base selon la revendication 1, dans lequel
lorsque les informations indiquent que la défaillance s'est produite à cause d'une suspension des fonctions de communication du terminal dans le deuxième système, ou lorsque les informations indiquent que la défaillance s'est produite à cause d'une raison autre qu'une suspension des fonctions de communication du terminal dans le deuxième système et que le terminal ne doit pas commuter un appareil servant de destination de connexion dans le deuxième système, les moyens de commande (304) sont configurés pour ordonner audit autre appareil de transmettre, à l'appareil de station de base, des données devant être transmises au terminal.

7. Terminal dans un système de communication sans fil qui inclut un appareil de station de base et le terminal, le terminal étant apte à se connecter à l'appareil de station de base dans un premier système et se connecter à un autre appareil dans un deuxième système, le terminal comprenant :
des moyens de notification (404) pour, lorsqu'une défaillance s'est produite dans une connexion dans le deuxième système entre le terminal et ledit autre appareil, notifier à l'appareil de station de base un rapport qui inclut une première partie indiquant une raison de l'occurrence de la défaillance et une deuxième partie indiquant un appareil candidat pour une destination de basculement de connexion dans le deuxième système ; et
des moyens de communication (401, 402) pour réaliser la commande d'une connexion dans le deuxième système grâce à la réalisation, en conformité avec un signal reçu à partir de la station de base,
d'une première commande de connexion, où dans la première commande de connexion, une connexion du terminal dans le deuxième système est arrêtée grâce à la réception, à partir de l'appareil de station de base, d'une instruction pour arrêter la connexion, et grâce à la transmission, à l'appareil de station de base, d'un rapport indiquant que la connexion est arrêtée dans un cas où la raison de l'occurrence de la défaillance est une suspension des fonctions de communication du terminal dans le deuxième système, et
d'une deuxième commande de connexion basée sur la deuxième partie dans le rapport obtenu, où dans la deuxième commande de connexion, une connexion du terminal avec ledit autre appareil est commutée vers une connexion avec l'appareil candidat, grâce à la réception, à partir de l'appareil de station de base, d'une notification pour changer une destination de connexion du terminal dans le deuxième système à partir dudit autre appareil jusqu'à l'appareil candidat, grâce à l'établissement d'une connexion avec l'appareil candidat sur la base de la notification reçue, et grâce à la transmission à l'appareil de station de base d'un message indiquant qu'une connexion entre le terminal et l'appareil candidat a été établie dans un cas où la raison de l'occurrence de la défaillance n'est pas une suspension des fonctions de communication du terminal dans le deuxième système.

8. Procédé de commande pour un appareil de station de base dans un système de communication sans fil qui inclut l'appareil de station de base et un terminal apte à se connecter à l'appareil de station de base dans un premier système et se connecter à un autre appareil dans un deuxième système, le procédé de commande comprenant :
lorsqu'une défaillance s'est produite dans une connexion dans le deuxième système entre le terminal et ledit autre appareil, l'obtention (S502, S511), à partir du terminal, d'un rapport qui inclut une première partie indiquant une raison de l'occurrence de la défaillance et une deuxième partie indiquant un appareil candidat pour une destination de basculement de connexion dans le deuxième système ;
la détermination (S503, S512) pour savoir si la raison de l'occurrence de la défaillance est ou non une suspension des fonctions de communication du terminal dans le deuxième système ;
la réalisation (S513-S515) d'une première commande de connexion, où dans la première commande de connexion, une connexion du terminal dans le deuxième système est arrêtée grâce à la transmission d'une instruction pour arrêter la connexion vers le terminal et vers ledit autre appareil, et grâce à la réception, à partir du terminal, d'un rapport indiquant que la connexion est arrêtée dans un cas où il est déterminé que la raison de l'occurrence de la défaillance est une suspension des fonctions de communication du terminal dans le deuxième système ; et
la réalisation (S504-S508) d'une deuxième commande de connexion basée sur la deuxième partie dans le rapport obtenu, où dans la deuxième commande de connexion, une connexion du terminal avec ledit autre appareil est commutée vers une connexion avec l'appareil candidat, grâce à la transmission, vers le terminal, ledit autre appareil, et l'appareil candidat, d'une notification pour changer une destination de connexion du terminal dans le deuxième système à partir dudit autre appareil jusqu'à l'appareil candidat, et grâce à la réception à partir du terminal d'un message indiquant qu'une connexion entre le terminal et l'appareil candidat a été établie dans un cas où il est déterminé que la raison de l'occurrence de la défaillance n'est pas une suspension des fonctions de communication du terminal dans le deuxième système.

9. Procédé de commande pour un terminal dans un système de communication sans fil qui inclut un appareil de station de base et le terminal, le terminal étant apte à se connecter à l'appareil de station de base dans un premier système et se connecter à un autre appareil dans un deuxième système, le procédé de commande comprenant :
lorsqu'une défaillance s'est produite dans une connexion dans le deuxième système entre le terminal et ledit autre appareil, la notification (S502, S511) à l'appareil de station de base d'un rapport qui inclut une première partie indiquant une raison de l'occurrence de la défaillance et une deuxième partie indiquant un appareil candidat pour une destination de basculement de connexion dans le deuxième système ; et
la réalisation de la commande d'une connexion dans le deuxième système grâce à la réalisation, en conformité avec un signal reçu à partir de la station de base,
d'une première commande de connexion, où dans la première commande de connexion, une connexion du terminal dans le deuxième système est arrêtée grâce à la réception (S513), à partir de l'appareil de station de base, d'une instruction pour arrêter la connexion, et grâce à la transmission (S515), à l'appareil de station de base, d'un rapport indiquant que la connexion est arrêtée dans un cas où la raison de l'occurrence de la défaillance est une suspension des fonctions de communication du terminal dans le deuxième système, et
d'une deuxième commande de connexion basée sur la deuxième partie dans le rapport obtenu, où dans la deuxième commande de connexion, une connexion du terminal avec ledit autre appareil est commutée vers une connexion avec l'appareil candidat, grâce à la réception (S504), à partir de l'appareil de station de base, d'une notification pour changer une destination de connexion du terminal dans le deuxième système à partir dudit autre appareil jusqu'à l'appareil candidat, grâce à l'établissement (S507) d'une connexion avec l'appareil candidat sur la base de la notification reçue, et grâce à la transmission (S508) à l'appareil de station de base d'un message indiquant qu'une connexion entre le terminal et l'appareil candidat a été établie dans un cas où la raison de l'occurrence de la défaillance n'est pas une suspension des fonctions de communication du terminal dans le deuxième système.

10. Programme pour amener un ordinateur fourni pour un appareil de station de base dans un système de communication sans fil à exécuter toutes les étapes du procédé de la revendication 8, le système de communication sans fil incluant l'appareil de station de base et un terminal apte à se connecter à l'appareil de station de base dans un premier système et se connecter à un autre appareil dans un deuxième système.

11. Programme pour amener un ordinateur fourni pour un terminal dans un système de communication sans fil à exécuter toutes les étapes du procédé de la revendication 9, le système de communication sans fil incluant un appareil de station de base et un terminal et le terminal étant apte à se connecter à l'appareil de station de base dans un premier système et se connecter à un autre appareil dans un deuxième système.
